# EUROPÄISCHE PATENTANMELDUNG

(11) **EP 4 484 248 A1**
(43) Veröffentlichungstag der Anmeldung: **01.01.2025**
(21) Anmeldenummer: 23182172.9
(22) Anmeldetag: 28.06.2023
(51) Int. Cl.: B61L 15/00, B61L 27/04

(54) **FAHRZEUGSTEUERSYSTEM UND VERFAHREN ZUM BETREIBEN EINES FAHRZEUGSTEUERSYSTEMS**

(71) Anmelder: Siemens Mobility GmbH, 81739 München (DE)
(72) Erfinder: Brosig, Christoph, 30173 Hannover (DE); Briesen, Sven, 38154 Königslutter (DE); Neumann, Heiko, 12623 Berlin (DE); Walsemann, Tobias, 31139 Hildesheim (DE)
(74) Vertreter: Siemens Patent Attorneys

(57) **Zusammenfassung**

Die Erfindung bezieht sich unter anderem auf ein Fahrzeugsteuersystem (10). Erfindungsgemäß ist vorgesehen, dass eine Schnittstelleneinrichtung (20) des Fahrzeugsteuersystems (10) umfasst: eine Aufforderungseinrichtung (21) zum Erzeugen eines Aufforderungssignals (Sa), mit dem vor dem Auslösen einer Aktion die fahrzeugführende Person (P) zur Abgabe einer akustischen Bestätigung, mit dem das Auslösen der Aktion freigegeben wird, aufgefordert wird, ein Mikrofon (22a) zum Empfang eines akustischen Eingangssignals (Se) und Erzeugen eines Empfangssignals (E1), eine erste Spracherkennungseinrichtung (23a), die das Empfangssignal (E1) auswertet und eine darin enthaltene Spracheingabe (SPE1) erfasst, eine der ersten Spracherkennungseinrichtung (23a) nachgeordnete erste Vergleichseinrichtung (24a), die die Spracheingabe (SPE1) auf eine Übereinstimmung mit einer Sollspracheingabe (SSPE) hin vergleicht, und eine Auslöseeinheit (25), die das Auslösen der Aktion zumindest auch davon abhängig macht, dass innerhalb einer vorgegebenen Zeitspanne nach Ausgabe des Aufforderungssignals (Sa) der Eingang einer mit der Sollspracheingabe (SSPE) übereinstimmenden Spracheingabe (SPE1) von der ersten Vergleichseinrichtung (24a) bestätigt worden ist.

## Beschreibung

Die Erfindung bezieht sich auf Fahrzeugsteuersysteme, insbesondere solche für Eisenbahnschienenfahrzeuge. Im Bereich der Eisenbahntechnik ist bei modernen Fahrzeugsteuersystemen oftmals vorgesehen, dass die Fahrzeugsteuersysteme auch sicherheitsrelevante Maßnahmen selbsttätig veranlassen können. Bei besonders sicherheitskritischen Maßnahmen wird in der Regel eine zusätzliche Bestätigung bzw. Freigabe der Maßnahme durch die fahrzeugführende Person verlangt; eine solche Bestätigung bzw. Freigabe kann durch Betätigen von Bedientasten oder dergleichen vorgenommen werden.

Der Erfindung liegt die Aufgabe zugrunde, ein Fahrzeugsteuersystem anzugeben, das einen besonders sicheren Fahrzeugbetrieb ermöglicht.

Diese Aufgabe wird erfindungsgemäß durch ein Fahrzeugsteuersystem mit den Merkmalen gemäß Patentanspruch 1 gelöst. Vorteilhafte Ausgestaltungen des erfindungsgemäßen Fahrzeugsteuersystems sind in Unteransprüchen angegeben.

Danach ist erfindungsgemäß vorgesehen, dass eine Schnittstelleneinrichtung des Fahrzeugsteuersystems umfasst: eine Aufforderungseinrichtung zum Erzeugen eines Aufforderungssignals, mit dem vor dem Auslösen einer Aktion die fahrzeugführende Person zur Abgabe einer akustischen Bestätigung, mit der das Auslösen der Aktion freigegeben wird, aufgefordert wird, ein Mikrofon zum Empfang eines akustischen Eingangssignals und Erzeugen eines Empfangssignals, eine erste Spracherkennungseinrichtung, die das Empfangssignal auswertet und eine darin enthaltene Spracheingabe erfasst, eine der ersten Spracherkennungseinrichtung nachgeordnete erste Vergleichseinrichtung, die die Spracheingabe auf eine Übereinstimmung mit einer Sollspracheingabe hin vergleicht, und eine Auslöseeinheit, die das Auslösen der Aktion zumindest auch davon abhängig macht, dass innerhalb einer vorgegebenen Zeitspanne nach Ausgabe des Aufforderungssignals der Eingang einer mit der Sollspracheingabe übereinstimmenden Spracheingabe von der ersten Vergleichseinrichtung bestätigt worden ist.

Ein wesentlicher Vorteil des erfindungsgemäßen Fahrzeugsteuersystems ist darin zu sehen, dass deren Schnittstelleneinrichtung eine personenseitige Bestätigung bzw. Freigabe von Aktionen, beispielsweise sicherheitskritischen Maßnahmen oder auch nicht sicherheitskritischen Maßnahmen, auf akustische Weise ermöglicht, sodass eine fahrzeugführende Person eine Freigabe ohne manuellen Eingriff erteilen kann. Eine Freigabe auf akustischem Wege ermöglicht es der fahrzeugführenden Person, mit minimaler Ablenkung vom Verkehrsgeschehen mit der Schnittstelleneinrichtung zu interagieren, insbesondere deshalb, weil der Blickkontakt auf dem Verkehrsgeschehen verbleiben kann und es der fahrzeugführenden Person erspart bleibt, den Blick auf manuelle Bedienelemente zu richten, um Bedienelemente wie Bedienknöpfe manuell korrekt bedienen zu können.

Ein weiterer wesentlicher Vorteil des erfindungsgemäßen Fahrzeugsteuersystems ist darin zu sehen, dass durch den erfindungsgemäß vorgesehenen Vergleich zwischen den akustischen Spracheingaben und fest vorgegebenen Sollspracheingaben Missverständnisse an der Mensch-Maschine-Schnittstelle auf ein sehr geringes Maß reduziert werden.

Das Fahrzeugsteuersystem umfasst vorzugsweise eine umschaltbare Assistenzeinrichtung, die zumindest eine erste Assistenzstufe und eine zweite Assistenzstufe zur Verfügung stellt, wobei die zweite Assistenzstufe für eine fahrzeugführende Person einen höheren Grad an Unterstützung als die erste Assistenzstufe gewährleistet. Die Schnittstelleneinrichtung ist vorzugsweise zumindest auch der Assistenzeinrichtung zugeordnet und kann als Aktion beispielsweise das Umschalten der Assistenzeinrichtung von der zweiten in die erste Assistenzstufe auslösen.

Vorteilhaft ist es, wenn die Auslöseeinheit das Umschalten der Assistenzeinrichtung von der zweiten in die erste Assistenzstufe zumindest auch davon abhängig macht, dass innerhalb der vorgegebenen Zeitspanne nach Ausgabe des Aufforderungssignals, mit dem zur Freigabe des Umschaltens von der zweiten in die erste Assistenzstufe aufgefordert wird, der Eingang der mit der Sollspracheingabe übereinstimmenden Spracheingabe von der ersten Vergleichseinrichtung bestätigt worden ist.

Um unautorisierte Freigaben unautorisierter Personen mittels der Schnittstelleneinrichtung zu verhindern, wird es als vorteilhaft angesehen, wenn die Schnittstelleneinrichtung eine erste Stimmenerkennungseinrichtung aufweist, die für das Erkennen der Stimme zumindest einer zur Fahrzeugführung autorisierten Person konfiguriert ist.

Die Schnittstelleneinrichtung, insbesondere deren Auslöseeinheit, ist bevorzugt derart ausgestaltet, dass sie das Auslösen der Aktion auch davon abhängig macht, dass innerhalb der vorgegebenen Zeitspanne nach Ausgabe des Aufforderungssignals die erste Stimmenerkennungseinrichtung bestätigt, dass das Empfangssignal und/oder die Spracheingabe von der oder einer der autorisierten Personen stammt.

Auch ist es von Vorteil, wenn das Fahrzeugsteuersystem eine Erfassungseinrichtung umfasst, die vor oder bei der Inbetriebnahme des Fahrzeugs die fahrzeugführende Person identifiziert.

Die Schnittstelleneinrichtung, insbesondere deren Auslöseeinheit, ist vorzugsweise derart ausgestaltet, dass sie das Auslösen der Aktion auch davon abhängig macht, dass innerhalb der vorgegebenen Zeitspanne nach Ausgabe des Aufforderungssignals die mit der Sollspracheingabe übereinstimmende Spracheingabe tatsächlich von derjenigen autorisierten Person detektiert worden ist, die vor oder bei der Inbetriebnahme des Fahrzeugs identifiziert worden ist.

Ein besonders hoher Grad an Sicherheit mit Blick auf eine korrekte Freigabenerkennung lässt sich in vorteilhafter Weise erreichen, wenn die Schnittstelleneinrichtung eine zweite Spracherkennungseinrichtung aufweist, in die ebenfalls das Empfangssignal des Mikrofons oder ein Empfangssignal eines anderen Mikrofons eingespeist wird.

Die Schnittstelleneinrichtung weist vorzugsweise eine der zweiten Spracherkennungseinrichtung nachgeordnete zweite Vergleichseinrichtung auf, die eine von der zweiten Spracherkennungseinrichtung erkannte Spracheingabe auf eine Übereinstimmung mit der Sollspracheingabe vergleicht.

Die Schnittstelleneinrichtung, insbesondere deren Auslöseeinheit, macht das Auslösen der Aktion vorzugsweise auch davon abhängig, dass innerhalb der vorgegebenen Zeitspanne nach Ausgabe des Aufforderungssignals die mit der Sollspracheingabe übereinstimmende Spracheingabe auch von der zweiten Vergleichseinrichtung detektiert worden ist.

Auch ist es von Vorteil, wenn die Schnittstelleneinrichtung eine zweite Stimmenerkennungseinrichtung aufweist, die für das Erkennen der Stimme zumindest einer zur Fahrzeugführung autorisierten Person konfiguriert ist.

Die Schnittstelleneinrichtung, insbesondere deren Auslöseeinheit, ist vorzugsweise derart ausgestaltet, dass sie das Auslösen der Aktion davon abhängig macht, dass innerhalb der vorgegebenen Zeitspanne nach Ausgabe des Aufforderungssignals sowohl die erste Stimmenerkennungseinrichtung als auch die zweite Stimmenerkennungseinrichtung bestätigen, dass das oder die Empfangssignale und/oder die Spracheingabe von der oder einer der autorisierten fahrzeugführenden Personen stammt.

Vorteilhaft ist es, wenn die Sollspracheingabe die Angabe einer das Fahrzeug identifizierenden Zugnummer und/oder den Namen der fahrzeugführenden Person umfasst.

Die Schnittstelleneinrichtung ist vorzugsweise eine autarke, unabhängig von einer Datenverbindung und Kommunikation mit streckenseitigen Einrichtungen arbeitsfähige Einrichtung, um einen Abbruch der Funktionalität im Falle eines Verlusts der Datenverbindung zu vermeiden.

Die erste und/oder zweite Stimmenerkennungseinrichtung umfassen vorzugsweise einen im Fahrzeug gespeicherten Datensatz mit Vergleichsdaten, die einen Stimmenvergleich und eine Stimmenerkennung von Stimmen autorisierter fahrzeugführender Personen ermöglichen.

Zumindest die erste Spracherkennungseinrichtung, die erste Vergleichseinrichtung und die Auslöseeinheit sind vorzugsweise durch Softwaremodule gebildet, die lokal in dem Fahrzeug gespeichert sind.

Die Aufforderungseinrichtung umfasst vorzugsweise einen Lautsprecher, und das Aufforderungssignal wird vorzugsweise zumindest auch akustisch erzeugt.

Von Vorteil ist es, wenn die Auslöseeinheit das Auslösen der Aktion blockiert und eine Notreaktion auslöst, wenn innerhalb der vorgegebenen Zeitspanne nach Ausgabe des Aufforderungssignals von der ersten Vergleichseinrichtung keine Eingangsbestätigung der mit der Sollspracheingabe übereinstimmenden Spracheingabe vorliegt.

Auch kann in vorteilhafter Weise vorgesehen sein, dass die Assistenzeinrichtung drei oder mehr Assistenzstufen zur Verfügung stellt, die unterschiedliche Grade an Unterstützung gewährleisten. Die Schnittstelleneinrichtung, insbesondere deren Auslöseeinheit, macht das Umschalten der Assistenzeinrichtung von einer einen höheren Grad an Unterstützung gewährleistenden Assistenzstufe in eine Assistenzstufe, die einen niedrigeren Grad an Unterstützung gewährleistet, vorzugsweise zumindest auch davon abhängig, dass innerhalb der vorgegebenen Zeitspanne nach Ausgabe eines Aufforderungssignals der Eingang einer mit der Sollspracheingabe übereinstimmenden Spracheingabe von der ersten Vergleichseinrichtung bestätigt wird.

Auch ist es vorteilhaft, wenn das Fahrzeugsteuersystem einen Streckenatlas umfasst und die Aufforderungseinrichtung das Aufforderungssignal erzeugt, wenn der Streckenatlas anzeigt, dass ein Streckenabschnitt vorausliegt, der ein höheres Maß an Verantwortung der fahrzeugführenden Person erfordert und eine niedrigere Assistenzstufe eingestellt werden muss.

Die Erfindung bezieht sich außerdem auf ein Verfahren zum Betreiben eines Fahrzeugsteuersystems, beispielsweise einem solchen wie oben beschrieben. Erfindungsgemäß ist bezüglich eines solchen Verfahrens vorgesehen, dass vor einem Auslösen einer Aktion, beispielsweise einem automatischen Umschalten einer Assistenzstufe einer umschaltbaren Assistenzeinrichtung, ein Aufforderungssignal erzeugt wird, mit dem die fahrzeugführende Person zur Abgabe einer Bestätigung, mit der das Auslösen der Aktion freigegeben wird, aufgefordert wird, innerhalb einer vorgegebenen Zeitspanne nach Ausgabe des Aufforderungssignals ein akustisches Eingangssignal empfangen und ein Empfangssignal erzeugt wird, das Empfangssignal ausgewertet und eine darin enthaltene Spracheingabe erfasst wird, die Spracheingabe auf eine Übereinstimmung mit einer Sollspracheingabe verglichen wird und das Auslösen der Aktion davon abhängig gemacht wird, dass innerhalb der vorgegebenen Zeitspanne nach Ausgabe des Aufforderungssignals eine mit der Sollspracheingabe übereinstimmende Spracheingabe eingegangen ist.

Bezüglich der Vorteile des erfindungsgemäßen Verfahrens und vorteilhafter Ausgestaltungen des erfindungsgemäßen Verfahrens sei auf die obigen Ausführungen im Zusammenhang mit dem erfindungsgemäßen Fahrzeugsteuersystem und dessen vorteilhafter Ausgestaltungen verwiesen.

Die Erfindung bezieht sich außerdem auf ein Computerprogrammprodukt für ein Fahrzeugsteuersystem, beispielsweise einem solchen wie oben beschrieben. Bezüglich eines solchen Computerprogrammprodukts ist erfindungsgemäß vorgesehen, dass das Computerprogrammprodukt umfasst: ein Aufforderungsmodul zum Erzeugen eines Aufforderungssignals, mit dem vor einem automatischen Auslösen einer Aktion die fahrzeugführende Person zur Abgabe einer Bestätigung aufgefordert wird, ein erstes Spracherkennungsmodul, das ein von einem Mikrofon bereitgestelltes Empfangssignal auswertet und eine darin enthaltene Spracheingabe erfasst, ein dem ersten Spracherkennungsmodul nachgeordnetes erstes Vergleichsmodul, das die Spracheingabe auf eine Übereinstimmung mit einer Sollspracheingabe vergleicht, und ein Auslösemodul, das das Auslösen der Aktion zumindest auch davon abhängig macht, dass innerhalb einer vorgegebenen Zeitspanne nach Ausgabe des Aufforderungssignals der Eingang einer mit der Sollspracheingabe übereinstimmende Spracheingabe von dem ersten Vergleichsmodul bestätigt worden ist.

Bezüglich der Vorteile des erfindungsgemäßen Computerprogrammprodukts und vorteilhafter Ausgestaltungen des erfindungsgemäßen Computerprogrammprodukts sei auf die obigen Ausführungen im Zusammenhang mit dem erfindungsgemäßen Fahrzeugsteuersystem und dessen vorteilhafter Ausgestaltungen verwiesen.

Die Erfindung bezieht sich außerdem auf ein Schienenfahrzeug. Erfindungsgemäß ist diesbezüglich vorgesehen, dass das Schienenfahrzeug mit einem Fahrzeugsteuersystem wie oben beschrieben und/oder einem Computerprogrammprodukt wie oben beschrieben ausgestattet ist und/oder zur Ausführung eines Verfahrens wie oben beschrieben konfiguriert ist.

Die Erfindung wird nachfolgend anhand von Ausführungsbeispielen näher erläutert; dabei zeigen beispielhaft:
- Fig. 1-6: Ausführungsbeispiele für erfindungsgemäße Fahrzeugsteuersysteme, anhand derer beispielhaft Ausführungsbeispiele für erfindungsgemäße Verfahren und Ausführungsbeispiele für erfindungsgemäße Schnittstelleneinrichtungen erläutert werden, und
- Figur 7: ein Ausführungsbeispiel für ein erfindungsgemäßes Schienenfahrzeug.

In den Figuren werden der Übersicht halber für identische oder vergleichbare Komponenten stets dieselben Bezugszeichen verwendet.

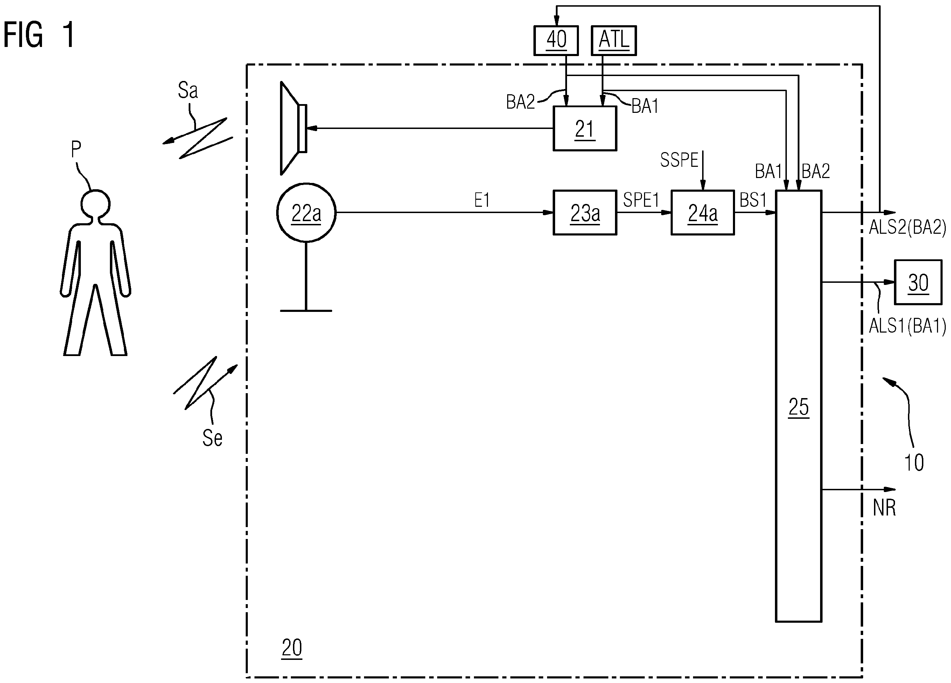

Die Figur 1 zeigt ein erstes Ausführungsbeispiel für ein erfindungsgemäßes Fahrzeugsteuersystem 10, anhand dessen ein erstes Ausführungsbeispiel für ein erfindungsgemäßes Verfahren erläutert wird.

Das Fahrzeugsteuersystem 10 gemäß Figur 1 ist vorzugsweise ein Zugsteuersystem zum Steuern eines Schienenfahrzeugs und umfasst eine Schnittstelleneinrichtung 20, eine Assistenzeinrichtung 30, eine Steuereinrichtung 40 und einen Streckenatlas ATL.

Die Assistenzeinrichtung 30 ist eine umschaltbare Assistenzeinrichtung, die zumindest eine erste Assistenzstufe und eine zweite Assistenzstufe zur Verfügung stellt. Die zweite Assistenzstufe gewährleistet für eine fahrzeugführende Person P einen höheren Grad an Unterstützung als die erste Assistenzstufe. Die Assistenzeinrichtung 30 kann selbstverständlich auch mehr als zwei Assistenzstufen, also drei oder mehr Assistenzstufen, zur Verfügung stellen, die unterschiedliche Grade an Unterstützung gewährleisten.

Die Schnittstelleneinrichtung 20 des Fahrzeugsteuersystems 10 ist eingangsseitig mit einer Aufforderungseinrichtung 21 ausgestattet, die zum Erzeugen eines Aufforderungssignals Sa geeignet ist. Mit dem Aufforderungssignal Sa kann vor dem Auslösen einer sicherheitsrelevanten Aktion die fahrzeugführende Person P zur Abgabe einer akustischen Bestätigung, mit der das Auslösen der Aktion freigegeben wird, aufgefordert werden.

Die Aufforderungseinrichtung 21 gemäß Figur 1 umfasst einen Lautsprecher, sodass das Aufforderungssignal Sa akustisch oder zumindest auch akustisch erzeugt werden kann. Eine Aktion, die von der fahrzeugführenden Person P zu bestätigen wäre, kann beispielsweise das Umstellen der Assistenzeinrichtung 30 von der zweiten Assistenzstufe in die erste Assistenzstufe, das Umstellen der Assistenzeinrichtung 30 von einer höheren Assistenzstufe in eine niedrigere Assistenzstufe mit höherer Verantwortung oder die Aufhebung der von einer Steuereinrichtung 40 noch gewährleisteten und in Kraft gehaltenen Zugsicherungsmaßnahme umfassen; dies wird weiter unten anhand von Beispielen noch näher erläutert.

Die Schnittstelleneinrichtung 20 weist außerdem ein Mikrofon 22a auf, das zum Empfang eines akustischen Eingangssignals Se und Erzeugen eines elektrischen Empfangssignals E1 geeignet ist. Eine etwaige akustische Bestätigung der fahrzeugführenden Person P kann somit von dem Mikrofon 22a erfasst werden.

Mit dem Mikrofon 22a steht eine erste Spracherkennungseinrichtung 23a in Verbindung, die das Empfangssignal E1 des Mikrofons 22a auswerten und eine darin enthaltene Spracheingabe SPE1 erfassen kann.

Der ersten Spracherkennungseinrichtung 23a ist eine erste Vergleichseinrichtung 24a nachgeordnet, die die Spracheingabe SPE1 auf eine Übereinstimmung mit einer Sollspracheingabe SSPE hin vergleichen kann. Die Sollspracheingabe SSPE umfasst vorzugsweise die Angabe einer das Fahrzeug identifizierenden Zugnummer und/oder den Namen der fahrzeugführenden Person.

Die erste Vergleichseinrichtung 24a ist ausgangsseitig mit einer Auslöseeinheit 25 verbunden, die das Auslösen der Aktion zumindest auch davon abhängig macht, dass innerhalb einer vorgegebenen Zeitspanne nach Ausgabe des Aufforderungssignals Sa der Eingang einer mit der Sollspracheingabe SSPE übereinstimmenden Spracheingabe SPE1 von der ersten Vergleichseinrichtung 24a mittels eines ersten Bestätigungssignals BS1 bestätigt worden ist.

Das Fahrzeugsteuersystem 10 kann beispielsweise wie folgt betrieben werden:
Stellt beispielsweise der Streckenatlas ATL fest, dass ein Streckenabschnitt vorausliegt, der ein höheres Maß an Verantwortung der fahrzeugführenden Person P erfordert und eine niedrigere Assistenzstufe als die, die aktuell in Betrieb ist, eingestellt werden muss, also eine sicherheitsrelevante Aktion ausgeführt werden muss, die von der fahrzeugführenden Person P bestätigt werden muss, so sendet der Streckenatlas ATL eine Bestätigungsaufforderung BA1 an die Aufforderungseinrichtung 21 und die Auslöseeinheit 25.

Die Aufforderungseinrichtung 21 erzeugt daraufhin ein Aufforderungssignal Sa, mit dem die fahrzeugführende Person P vor dem Umstellen der Assistenzstufe, also vor dem Auslösen dieser Aktion, zur Abgabe einer akustischen Bestätigung aufgefordert wird; erfolgt die akustische Bestätigung rechtzeitig, so wird die Aktion von der Schnittstelleneinrichtung 20 final freigegeben bzw. ausgelöst.

Das Mikrofon 22a empfängt durchgehend das akustische Eingangssignal Se und erzeugt durchgehend das Empfangssignal E1, sodass eine etwaige Spracheingabe SPE1 der fahrzeugführenden Person P von dem Mikrofon 22a erfasst wird.

Die erste Spracherkennungseinrichtung 23a wertet das Empfangssignal E1 des Mikrofons 22a aus und erfasst eine darin enthaltene Spracheingabe SPE1, also insbesondere eine Spracheingabe der fahrzeugführenden Person P. Für die weiteren Erläuterungen wird nachfolgend beispielhaft davon ausgegangen, dass eine Spracheingabe SPE1 erkannt worden ist.

Die erste Vergleichseinrichtung 24a vergleicht die Spracheingabe SPE1 auf eine Übereinstimmung mit der Sollspracheingabe SSPE. Stellt sie eine Übereinstimmung oder zumindest eine Übereinstimmung in einem vorgegebenen Mindestmaß fest, so erzeugt sie ein erstes Bestätigungssignal BS1, mit dem bestätigt wird, dass eine der Sollspracheingabe SSPE entsprechende Spracheingabe SPE1 erfasst worden ist.

Die Auslöseeinheit 25 empfängt das erste Bestätigungssignal BS1 und macht das Auslösen der Aktion, hier also beispielsweise das Umstellen der Assistenzstufe, davon abhängig, dass innerhalb einer vorgegebenen Zeitspanne, die beispielsweise zwischen 5 und 10 Sekunden betragen kann, nach der Ausgabe des Aufforderungssignals Sa bzw. dem Empfang der Bestätigungsaufforderung BA1 das erste Bestätigungssignal BS1 empfangen wird.

Falls das erste Bestätigungssignal BS1 innerhalb der Zeitspanne vorliegt, so gibt die Auslöseeinheit 25 ein Auslösesignal ALS1 aus, mit dem der Empfang der akustischen Bestätigung nach außen signalisiert wird und die Aktion, hier also das Umstellen der Assistenzstufe, ausgelöst wird, indem das Auslösesignal ALS1 zu der Assistenzeinrichtung 30 übermittelt wird.

Wenn eine Bestätigungsaufforderung BA2 von der Steuereinrichtung 40 erzeugt wird, um beispielsweise eine Aufhebung einer Zugsicherungsmaßnahme (z. B. Blockieren der Türen, etc.) freigeben zu lassen, so würde die Auslöseeinheit 25 ein Auslösesignal ALS2 beispielsweise an die Steuereinrichtung 40 senden.

Die Auslöseeinheit 25 blockiert das Auslösen der Aktion und löst vorzugsweise eine Notreaktion NR aus, wenn innerhalb der vorgegebenen Zeitspanne nach Ausgabe des Aufforderungssignals Sa von der ersten Vergleichseinrichtung 24a keine Eingangsbestätigung der mit der Sollspracheingabe SSPE übereinstimmenden Spracheingabe SPE1 vorliegt.

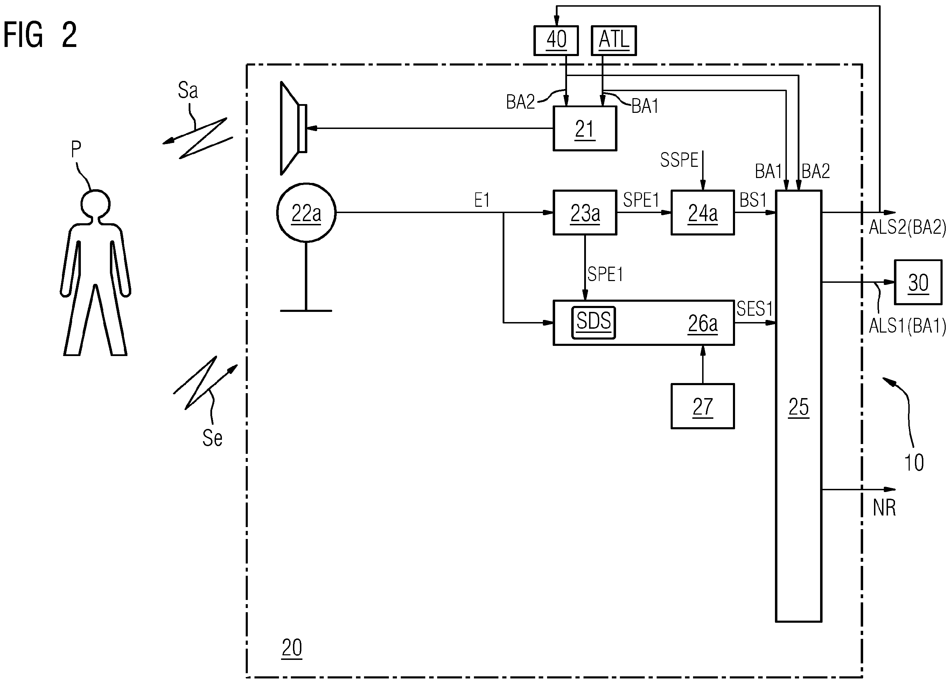

Die Figur 2 zeigt ein zweites Ausführungsbeispiel für ein erfindungsgemäßes Fahrzeugsteuersystem 10, anhand dessen ein zweites Ausführungsbeispiel für ein erfindungsgemäßes Verfahren erläutert wird.

Das Schnittstelleneinrichtung 20 gemäß Figur 1 entspricht der Schnittstelleneinrichtung 20 gemäß Figur 2 mit dem einzigen Unterschied, dass sie zusätzlich eine erste Stimmenerkennungseinrichtung 26a aufweist, die für das Erkennen der Stimme zumindest einer zur Fahrzeugführung autorisierten Person konfiguriert ist. Zu diesem Zwecke umfasst die erste Stimmenerkennungseinrichtung 26a einen im Fahrzeug, beispielsweise in der ersten Stimmenerkennungseinrichtung 26a, gespeicherten Datensatz SDS mit Vergleichsdaten, die einen Stimmenvergleich und eine Stimmenerkennung von Stimmen autorisierter fahrzeugführender Personen ermöglichen.

Die erste Stimmenerkennungseinrichtung 26a erzeugt ein erstes Stimmenerkennungssignal SES1, wenn das Empfangssignal E1 und/oder die Spracheingabe SPE1 von der oder einer der autorisierten Personen stammt.

Bei dem Ausführungsbeispiel gemäß Figur 2 wird das Stimmenerkennungssignal SES1 zu der Auslöseeinheit 25 übertragen. Die Auslöseeinheit 25 ist dazu ausgestaltet, dass sie das Auslösen der Aktion, beispielweise also das Umstellen der Assistenzstufe oder das Aufheben einer Zugsicherungsmaßnahme, zumindest auch davon abhängig macht, dass innerhalb der vorgegebenen Zeitspanne nach Ausgabe des Aufforderungssignals Sa die erste Stimmenerkennungseinrichtung 26a mittels ihres Stimmenerkennungssignals SES1 bestätigt, dass das Empfangssignal E1 und/oder die Spracheingabe SPE1 von der oder einer der autorisierten Personen stammt.

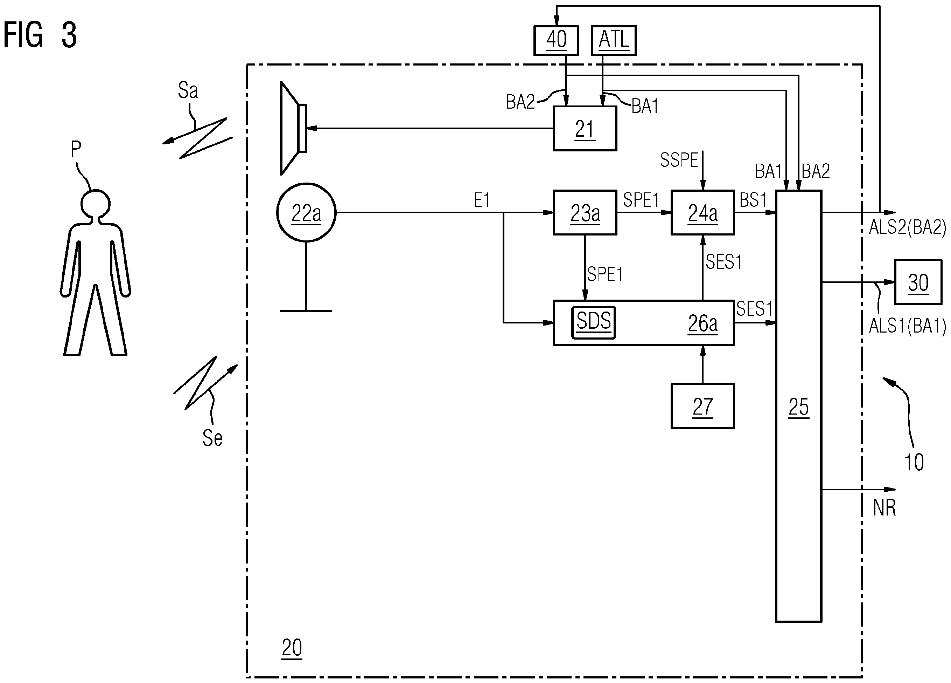

Alternativ oder zusätzlich kann das Stimmenerkennungssignal SES1 zu der Vergleichseinrichtung 24a übermittelt werden, wie beispielhaft die Figur 3 anhand eines dritten Ausführungsbeispiels zeigt; in diesem Falle ist die erste Vergleichseinrichtung 24a vorzugsweise derart ausgebildet, dass sie das erste Bestätigungssignal BS1 nur dann an die Auslöseeinheit 25 ausgibt, wenn die Spracheingabe SPE1 der Sollspracheingabe SSPE entspricht und das erste Stimmenerkennungssignal SES1 der ersten Stimmenerkennungseinrichtung 26a vorliegt.

Bei den Ausführungsbeispielen gemäß den Figuren 2 und 3 umfasst die Schnittstelleneinrichtung 20 zusätzlich eine Erfassungseinrichtung 27, die vor oder bei der Inbetriebnahme des Fahrzeugs die fahrzeugführende Person P identifiziert. Eine solche Identifizierung kann beispielsweise durch eine Chipkarte bzw. Smartcard oder eine Gesichtserkennung erfolgen.

Die erste Vergleichseinrichtung 24a ist mit der Erfassungseinrichtung 27 verbunden und macht die Ausgabe des ersten Stimmenerkennungssignals SES1 davon abhängig, dass das Empfangssignal E1 und/oder die Spracheingabe SPE1 von derjenigen autorisierten Person stammt, die vor oder bei der Inbetriebnahme des Fahrzeugs identifiziert worden ist.

Die Auslöseeinheit 25 blockiert das Auslösen der Aktion und löst vorzugsweise die Notreaktion NR aus, wenn innerhalb der vorgegebenen Zeitspanne nach Ausgabe des Aufforderungssignals Sa von der ersten Vergleichseinrichtung 24a keine Eingangsbestätigung der mit der Sollspracheingabe SSPE übereinstimmenden Spracheingabe SPE1 vorliegt oder das Stimmenerkennungssignal SES1 fehlt.

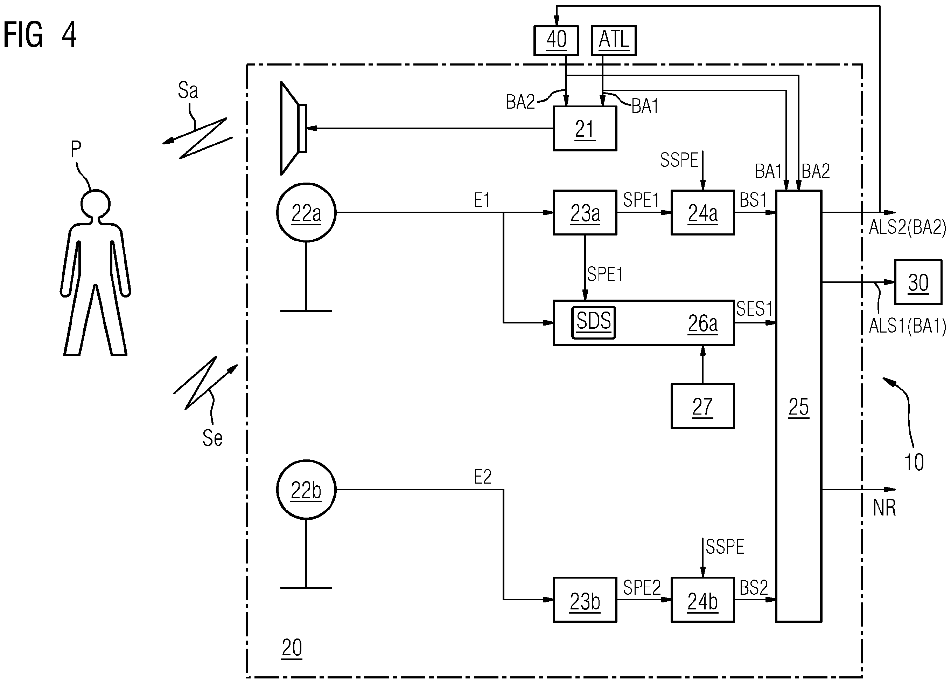

Die Figur 4 zeigt ein viertes Ausführungsbeispiel für ein erfindungsgemäßes Fahrzeugsteuersystem 10, anhand dessen ein weiteres Ausführungsbeispiel für ein erfindungsgemäßes Verfahren erläutert wird.

Die Schnittstelleneinrichtung 20 gemäß Figur 4 weist eine zweite Spracherkennungseinrichtung 23b auf, in die ein zweites Empfangssignal E2 eines anderen bzw. zweiten Mikrofons 22b eingespeist wird.

Die erste Spracherkennungseinrichtung 23a unterscheidet sich vorzugsweise von der zweiten Spracherkennungseinrichtung 23b in der Methode bzw. Software zur Spracherkennung.

Der zweiten Spracherkennungseinrichtung 23b nachgeordnet ist eine zweite Vergleichseinrichtung 24b, die eine von der zweiten Spracherkennungseinrichtung 23b erkannte Spracheingabe SPE2 auf eine Übereinstimmung mit der Sollspracheingabe SSPE vergleicht.

Die Auslöseeinheit 25 macht das Auslösen der Aktion auch davon abhängig, dass innerhalb der vorgegebenen Zeitspanne nach Ausgabe des Aufforderungssignals Sa die mit der Sollspracheingabe SSPE übereinstimmende Spracheingabe SPE2 auch von der zweiten Vergleichseinrichtung 24b detektiert worden ist.

Die Auslöseeinheit 25 blockiert das Auslösen der Aktion und löst vorzugsweise die Notreaktion NR aus, wenn innerhalb der vorgegebenen Zeitspanne nach Ausgabe des Aufforderungssignals Sa von der zweiten Vergleichseinrichtung 24b keine Eingangsbestätigung der mit der Sollspracheingabe SSPE übereinstimmenden Spracheingabe SPE2 vorliegt.

Im Übrigen gelten die obigen Erläuterungen im Zusammenhang mit den Figuren 1 bis 3 für das vierte Ausführungsbeispiel gemäß Figur 4 entsprechend.

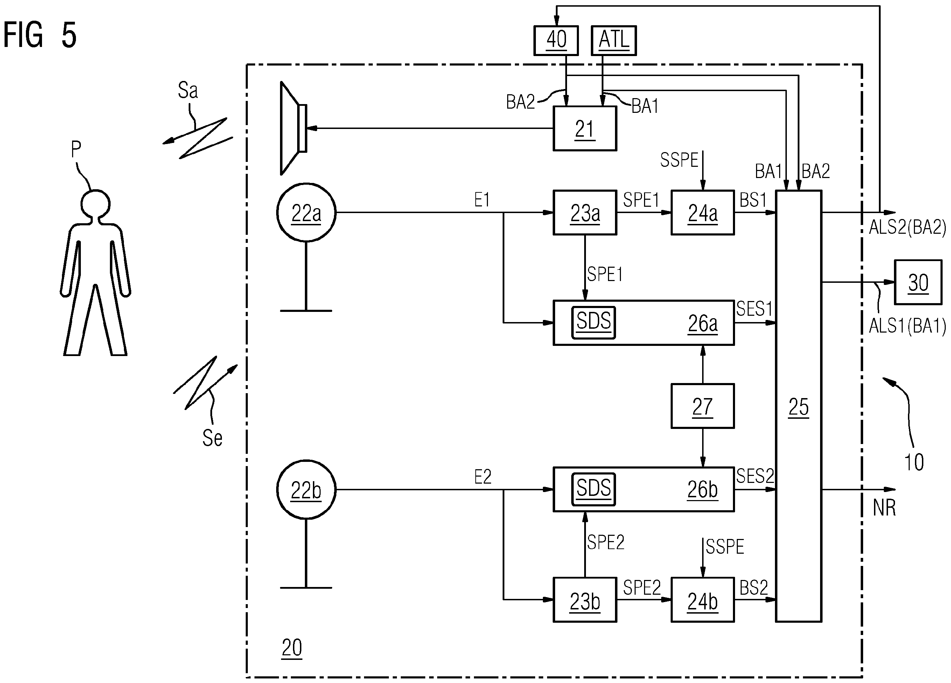

Die Figur 5 zeigt ein fünftes Ausführungsbeispiel für ein erfindungsgemäßes Fahrzeugsteuersystem 10, anhand dessen ein weiteres Ausführungsbeispiel für ein erfindungsgemäßes Verfahren erläutert wird.

Die Schnittstelleneinrichtung 20 gemäß Figur 5 weist zusätzlich zu den im Zusammenhang mit dem vierten Ausführungsbeispiel gemäß Figur 4 erläuterten Komponenten eine zweite Stimmenerkennungseinrichtung 26b auf, die - wie auch die erste Stimmenerkennungseinrichtung 26a - für das Erkennen der Stimme zumindest einer zur Fahrzeugführung autorisierten Person konfiguriert ist.

Zu diesem Zwecke weist die zweite Stimmenerkennungseinrichtung 26b beispielsweise ebenfalls einen Datensatz SDS mit Vergleichsdaten auf, die einen Stimmenvergleich und eine Stimmenerkennung von Stimmen autorisierter fahrzeugführender Personen ermöglichen.

Die zweite Stimmenerkennungseinrichtung 26b unterscheidet sich vorzugsweise von der ersten Stimmenerkennungseinrichtung 23a in der Methode bzw. Software zur Stimmenerkennung.

Die zweite Stimmenerkennungseinrichtung 26b erzeugt ein zweites Bestätigungssignal SES2, wenn das zweite Empfangssignal E2 und/oder die Spracheingabe SPE2 von der oder einer der autorisierten Personen stammt.

Auch bei dem fünften Ausführungsbeispiel umfasst die Schnittstelleneinrichtung 20 zusätzlich die Erfassungseinrichtung 27, die vor oder bei der Inbetriebnahme des Fahrzeugs die fahrzeugführende Person identifiziert.

Die zweite Stimmenerkennungseinrichtung 26b ist ebenfalls mit der Erfassungseinrichtung 27 verbunden und macht die Ausgabe des zweiten Stimmenerkennungssignals SES2 davon abhängig, dass das Empfangssignal E2 und/oder die Spracheingabe SPE2 von derjenigen autorisierten Person stammt, die vor oder bei der Inbetriebnahme des Fahrzeugs identifiziert worden ist.

Bei dem Ausführungsbeispiel gemäß Figur 5 wird das zweite Stimmenerkennungssignal SES2 zu der Auslöseeinheit 25 übertragen. Die Auslöseeinheit 25 ist derart ausgestaltet, dass sie das Auslösen der Aktion, beispielweise das Umstellen der Assistenzstufe oder das Aufheben einer Zugsicherungsmaßnahme, zumindest auch davon abhängig macht, dass innerhalb der vorgegebenen Zeitspanne nach Ausgabe des Aufforderungssignals Sa die zweite Stimmenerkennungseinrichtung 26b mittels ihres zweiten Stimmenerkennungssignals SES2 bestätigt, dass das Empfangssignal E2 und/oder die Spracheingabe SPE2 von der oder einer der autorisierten Personen stammt.

Die Auslöseeinheit 25 blockiert das Auslösen der Aktion und löst vorzugsweise die Notreaktion NR aus, wenn innerhalb der vorgegebenen Zeitspanne nach Ausgabe des Aufforderungssignals Sa von der zweiten Vergleichseinrichtung 24b keine Eingangsbestätigung der mit der Sollspracheingabe SSPE übereinstimmenden Spracheingabe SPE2 vorliegt oder das zweite Stimmenerkennungssignal SES2 fehlt.

Im Übrigen gelten die obigen Erläuterungen im Zusammenhang mit den Figuren 1 bis 4 für das fünfte Ausführungsbeispiel gemäß Figur 5 entsprechend.

Die Schnittstelleneinrichtungen 20 gemäß den Figuren 1 bis 5 sind vorzugsweise autarke, unabhängig von einer Kommunikation mit streckenseitigen Einrichtungen arbeitsfähige Einrichtungen.

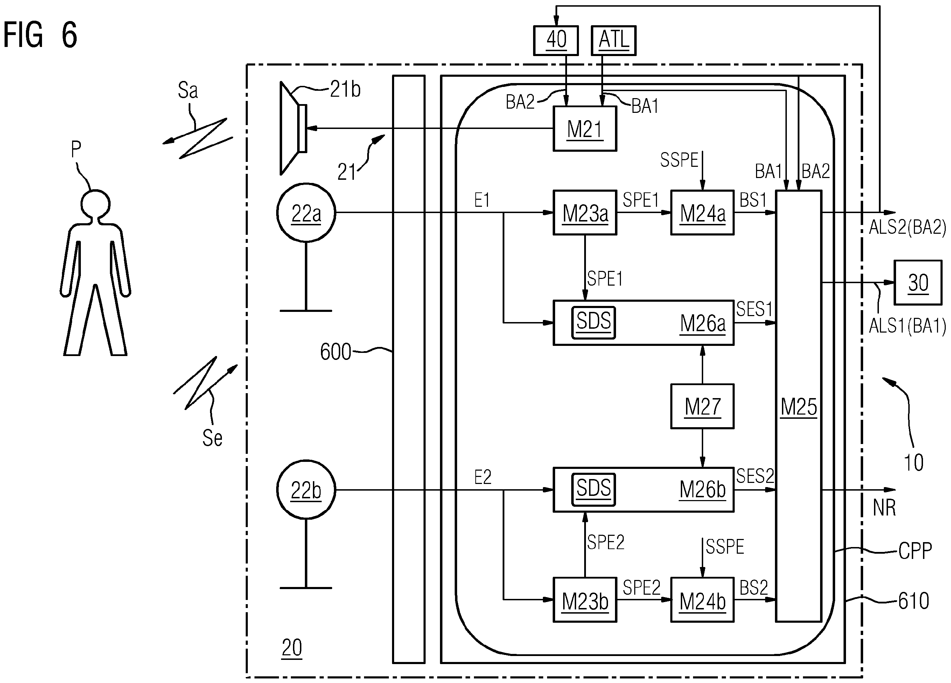

Die Figur 6 zeigt anhand des Ausführungsbeispiels gemäß Figur 5 eine vorteilhafte Ausgestaltung der Schnittstelleneinrichtung 20, bei der zumindest die erste Spracherkennungseinrichtung 23a, die erste Vergleichseinrichtung 24a und die Auslöseeinheit 25 durch Softwaremodule gebildet sind, die lokal in dem Fahrzeug gespeichert sind.

Die Schnittstelleneinrichtung 20 gemäß Figur 6 kann eine Recheneinrichtung 600 und einen Speicher 610 umfassen. In dem Speicher 610 ist ein Computerprogrammprodukt CPP abgespeichert, das eine Vielzahl an Softwaremodulen umfasst.

Das Computerprogrammprodukt CPP gemäß Figur 6 umfasst zumindest ein Aufforderungsmodul M21 zum Erzeugen eines elektrischen Aufforderungssignals, das von einem zugeordneten Lautsprecher 21b zu einem akustischen Aufforderungssignal Sa gewandelt wird. Mit dem akustischen Aufforderungssignal Sa wird vor einem automatischen Auslösen einer Aktion die fahrzeugführende Person P zur Abgabe einer Bestätigung aufgefordert. Das Aufforderungsmodul M21 bildet bei Ausführung durch die Recheneinrichtung 600 die Aufforderungseinrichtung 21 gemäß den Figuren 1 bis 5.

Das Computerprogrammprodukt CPP gemäß Figur 6 umfasst außerdem zumindest ein erstes Spracherkennungsmodul M23a, das ein von einem Mikrofon 22a empfangenes akustisches Eingangssignal Se auswertet und eine darin enthaltene Spracheingabe SPE1 erfasst. Das Spracherkennungsmodul M23a bildet bei Ausführung durch die Recheneinrichtung 600 die Spracherkennungseinrichtung 23a gemäß den Figuren 1 bis 5.

Das Computerprogrammprodukt CPP gemäß Figur 6 umfasst außerdem zumindest ein dem ersten Spracherkennungsmodul nachgeordnetes erstes Vergleichsmodul M24a, das die Spracheingabe SPE1 auf eine Übereinstimmung mit einer Sollspracheingabe SSPE vergleicht. Das Vergleichsmodul M24a bildet bei Ausführung durch die Recheneinrichtung 600 die Vergleichseinrichtung 24a gemäß den Figuren 1 bis 5.

Das Computerprogrammprodukt CPP gemäß Figur 6 umfasst außerdem zumindest ein Auslösemodul M25, das das Auslösen der Aktion - beispielsweise das Umschalten der Assistenzeinrichtung 30 von der zweiten in die erste Assistenzstufe - zumindest auch davon abhängig macht, dass innerhalb einer vorgegebenen Zeitspanne nach Ausgabe des Aufforderungssignals Sa der Eingang einer mit der Sollspracheingabe SSPE übereinstimmenden Spracheingabe SPE1 von der ersten Vergleichseinrichtung 24a bestätigt worden ist. Das Auslösemodul M25 bildet bei Ausführung durch die Recheneinrichtung 600 die Auslöseeinheit 25 gemäß den Figuren 1 bis 5.

Das Computerprogrammprodukt CPP gemäß Figur 6 kann außerdem umfassen
- ein erstes Stimmenerkennungsmodul M26a, das bei Ausführung durch die Recheneinrichtung 600 die erste Stimmenerkennungseinrichtung 26a gemäß den Figuren 2 bis 5 bildet, und/oder
- ein zweites Spracherkennungsmodul M23b, das bei Ausführung durch die Recheneinrichtung 600 die zweite Spracherkennungseinrichtung 23b gemäß den Figuren 4 bis 5 bildet, und/oder
- ein zweites Vergleichsmodul M24b, das bei Ausführung durch die Recheneinrichtung 600 die zweite Vergleichseinrichtung 24b gemäß den Figuren 4 bis 5 bildet, und/oder
- ein zweites Stimmenerkennungsmodul M26a, das bei Ausführung durch die Recheneinrichtung 600 die zweite Stimmenerkennungseinrichtung 26b gemäß Figur 5 bildet, und/oder
- ein Erfassungsmodul M27, das bei Ausführung durch die Recheneinrichtung 600 die Erfassungseinrichtung 27 gemäß den Figuren 2 bis 5 bildet.

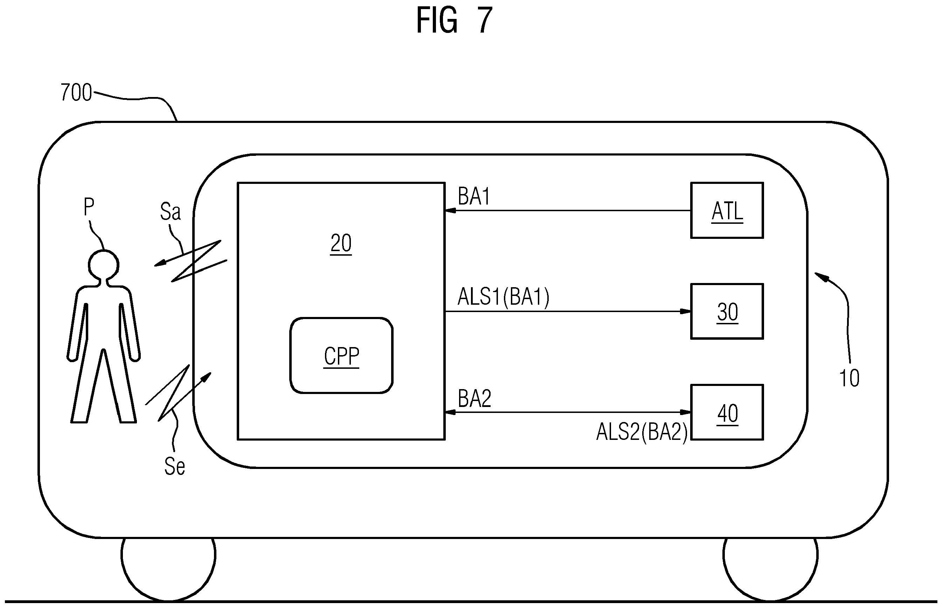

Die Figur 7 zeigt ein Ausführungsbeispiel für ein erfindungsgemäßes Schienenfahrzeug 700. Das Schienenfahrzeug 700 ist mit einem Fahrzeugsteuersystem 10, beispielsweise einem solchen wie in den Figuren 1 bis 6 gezeigt, ausgestattet. Das Fahrzeugsteuersystem 10 kann ein Computerprogrammprodukt CPP, wie es in der Figur 5 gezeigt ist, umfassen.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechteridentität mit umfasst.

### Bezugszeichenliste

- 10: Fahrzeugsteuersystem
- 20: Schnittstelleneinrichtung
- 21: Aufforderungseinrichtung
- 21b: Lautsprecher
- 22a: Mikrofon
- 22b: Mikrofon
- 23a: erste Spracherkennungseinrichtung
- 23b: zweite Spracherkennungseinrichtung
- 24a: erste Vergleichseinrichtung
- 24b: zweite Vergleichseinrichtung
- 25: Auslöseeinheit
- 26a: erste Stimmenerkennungseinrichtung
- 26b: zweite Stimmenerkennungseinrichtung
- 27: Erfassungseinrichtung
- 30: Assistenzeinrichtung
- 40: Steuereinrichtung
- 600: Recheneinrichtung
- 610: Speicher
- 700: Schienenfahrzeug

- ALS1: Auslösesignal
- ALS2: Auslösesignal
- ATL: Streckenatlas
- BA1: Bestätigungsaufforderung
- BA2: Bestätigungsaufforderung
- BS1: erstes Bestätigungssignal
- CPP: Computerprogrammprodukt
- E1: Empfangssignal
- E2: Empfangssignal
- M21: Aufforderungsmodul
- M23a: erstes Spracherkennungsmodul
- M23b: zweites Spracherkennungsmodul
- M24a: erstes Vergleichsmodul
- M24b: zweites Vergleichsmodul
- M25: Auslösemodul
- M26a: erstes Stimmenerkennungsmodul
- M26: zweites Stimmenerkennungsmodul
- M27: Erfassungsmodul
- NR: Notreaktion
- P: fahrzeugführende Person
- Sa: Aufforderungssignal
- SDS: Datensatz
- Se: Eingangssignal
- SES1: erstes Stimmenerkennungssignal
- SES2: zweites Stimmenerkennungssignal
- SPE1: Spracheingabe
- SPE2: Spracheingabe
- SSPE: Sollspracheingabe

## Patentansprüche

1. Fahrzeugsteuersystem (10),
**dadurch gekennzeichnet, dass** eine Schnittstelleneinrichtung (20) des Fahrzeugsteuersystems (10) umfasst:
- eine Aufforderungseinrichtung (21) zum Erzeugen eines Aufforderungssignals (Sa), mit dem vor dem Auslösen einer Aktion die fahrzeugführende Person (P) zur Abgabe einer akustischen Bestätigung, mit dem das Auslösen der Aktion freigegeben wird, aufgefordert wird,
- ein Mikrofon (22a) zum Empfang eines akustischen Eingangssignals (Se) und Erzeugen eines Empfangssignals (E1),
- eine erste Spracherkennungseinrichtung (23a), die das Empfangssignal (E1) auswertet und eine darin enthaltene Spracheingabe (SPE1) erfasst,
- eine der ersten Spracherkennungseinrichtung (23a) nachgeordnete erste Vergleichseinrichtung (24a), die die Spracheingabe (SPE1) auf eine Übereinstimmung mit einer Sollspracheingabe (SSPE) hin vergleicht, und
- eine Auslöseeinheit (25), die das Auslösen der Aktion zumindest auch davon abhängig macht, dass innerhalb einer vorgegebenen Zeitspanne nach Ausgabe des Aufforderungssignals (Sa) der Eingang einer mit der Sollspracheingabe (SSPE) übereinstimmenden Spracheingabe (SPE1) von der ersten Vergleichseinrichtung (24a) bestätigt worden ist.

2. Fahrzeugsteuersystem (10) nach Anspruch 1,
**dadurch gekennzeichnet, dass**
- das Fahrzeugsteuersystem (10) eine umschaltbare Assistenzeinrichtung (30) umfasst, die zumindest eine erste Assistenzstufe und eine zweite Assistenzstufe zur Verfügung stellt, wobei die zweite Assistenzstufe für eine fahrzeugführende Person (P) einen höheren Grad an Unterstützung als die erste Assistenzstufe gewährleistet, und
- die Schnittstelleneinrichtung (20) zumindest auch der Assistenzeinrichtung (30) zugeordnet ist und als Aktion das Umschalten der Assistenzeinrichtung (30) von der zweiten in die erste Assistenzstufe auslösen kann,
- wobei die Auslöseeinheit (25) das Umschalten der Assistenzeinrichtung (30) von der zweiten in die erste Assistenzstufe zumindest auch davon abhängig macht, dass innerhalb der vorgegebenen Zeitspanne nach Ausgabe des Aufforderungssignals (Sa), mit dem zur Freigabe des Umschaltens von der zweiten in die erste Assistenzstufe aufgefordert wird, der Eingang der mit der Sollspracheingabe (SSPE) übereinstimmenden Spracheingabe (SPE1) von der ersten Vergleichseinrichtung (24a) bestätigt worden ist.

3. Fahrzeugsteuersystem (10) nach einem der voranstehenden Ansprüche,
**dadurch gekennzeichnet, dass**
- die Schnittstelleneinrichtung (20) eine erste Stimmenerkennungseinrichtung (26a) aufweist, die für das Erkennen der Stimme zumindest einer zur Fahrzeugführung autorisierten Person konfiguriert ist, und
- die Schnittstelleneinrichtung (20) derart ausgestaltet ist, dass sie das Auslösen der Aktion auch davon abhängig macht, dass innerhalb der vorgegebenen Zeitspanne nach Ausgabe des Aufforderungssignals (Sa) die erste Stimmenerkennungseinrichtung (26a) bestätigt, dass das Empfangssignal (E1) und/oder die Spracheingabe (SPE1) von der oder einer der autorisierten Personen stammt.

4. Fahrzeugsteuersystem (10) nach Anspruch 3,
**dadurch gekennzeichnet, dass**
- das Fahrzeugsteuersystem (10) eine Erfassungseinrichtung (27) umfasst, die vor oder bei der Inbetriebnahme des Fahrzeugs die fahrzeugführende Person (P) identifiziert, und
- die Schnittstelleneinrichtung (20) derart ausgestaltet ist, dass sie das Auslösen der Aktion auch davon abhängig macht, dass innerhalb der vorgegebenen Zeitspanne nach Ausgabe des Aufforderungssignals (Sa) die mit der Sollspracheingabe (SSPE) übereinstimmende Spracheingabe (SPE1) von derjenigen autorisierten Person detektiert worden ist, die vor oder bei der Inbetriebnahme des Fahrzeugs identifiziert worden ist.

5. Fahrzeugsteuersystem (10) nach einem der voranstehenden Ansprüche,
**dadurch gekennzeichnet, dass**
- die Schnittstelleneinrichtung (20) eine zweite Spracherkennungseinrichtung (23b) aufweist, in die ebenfalls das Empfangssignal (E1) des Mikrofons (22a) oder ein Empfangssignal (E2) eines anderen Mikrofons (22b) eingespeist wird, und
- die Schnittstelleneinrichtung (20) eine der zweiten Spracherkennungseinrichtung (23b) nachgeordnete zweite Vergleichseinrichtung (24b) aufweist, die eine von der zweiten Spracherkennungseinrichtung (23b) erkannte Spracheingabe (SPE2) auf eine Übereinstimmung mit der Sollspracheingabe (SSPE) vergleicht, und
- die Auslöseeinheit (25) das Auslösen der Aktion auch davon abhängig macht, dass innerhalb der vorgegebenen Zeitspanne nach Ausgabe des Aufforderungssignals (Sa) die mit der Sollspracheingabe (SSPE) übereinstimmende Spracheingabe (SPE2) auch von der zweiten Vergleichseinrichtung (24b) bestätigt worden ist.

6. Fahrzeugsteuersystem (10) nach einem der voranstehenden Ansprüche,
**dadurch gekennzeichnet, dass**
- die Schnittstelleneinrichtung (20) eine zweite Stimmenerkennungseinrichtung (26b) aufweist, die für das Erkennen der Stimme zumindest einer zur Fahrzeugführung autorisierten Person konfiguriert ist, und
- die Schnittstelleneinrichtung (20) derart ausgestaltet ist, dass sie das das Auslösen der Aktion davon abhängig macht, dass innerhalb der vorgegebenen Zeitspanne nach Ausgabe des Aufforderungssignals (Sa) sowohl die erste Stimmenerkennungseinrichtung (26a) als auch die zweite Stimmenerkennungseinrichtung (26b) bestätigen, dass das oder die Empfangssignale (E1, E2) und/oder die Spracheingabe (SPE1, SPE2) von der oder einer der autorisierten fahrzeugführenden Personen (P) stammt.

7. Fahrzeugsteuersystem (10) nach einem der voranstehenden Ansprüche,
**dadurch gekennzeichnet, dass** die Sollspracheingabe (SSPE) die Angabe einer das Fahrzeug identifizierenden Zugnummer und/oder den Namen der fahrzeugführenden Person (P) umfasst.

8. Fahrzeugsteuersystem (10) nach einem der voranstehenden Ansprüche,
**dadurch gekennzeichnet, dass** die Schnittstelleneinrichtung (20) eine autarke, unabhängig von einer Kommunikation mit streckenseitigen Einrichtungen arbeitsfähige Einrichtung ist.

9. Fahrzeugsteuersystem (10) nach einem der voranstehenden Ansprüche,
**dadurch gekennzeichnet, dass** die erste und/oder zweite Stimmenerkennungseinrichtung (26a, 26b) einen im Fahrzeug gespeicherten Datensatz (SDS) mit Vergleichsdaten umfasst, die einen Stimmenvergleich und eine Stimmenerkennung von Stimmen autorisierter fahrzeugführender Personen (P) ermöglichen.

10. Fahrzeugsteuersystem (10) nach einem der voranstehenden Ansprüche,
**dadurch gekennzeichnet, dass** die erste Spracherkennungseinrichtung (23a), die erste Vergleichseinrichtung (24a) und die Auslöseeinheit (25) durch Softwaremodule gebildet sind, die lokal in dem Fahrzeug gespeichert sind.

11. Fahrzeugsteuersystem (10) nach einem der voranstehenden Ansprüche,
**dadurch gekennzeichnet, dass** die Aufforderungseinrichtung (21) einen Lautsprecher (21b) umfasst und das Aufforderungssignal (Sa) zumindest auch akustisch erzeugt.

12. Fahrzeugsteuersystem (10) nach einem der voranstehenden Ansprüche,
**dadurch gekennzeichnet, dass** die Auslöseeinheit (25) das Auslösen der Aktion blockiert und eine Notreaktion (NR) auslöst, wenn innerhalb der vorgegebenen Zeitspanne nach Ausgabe des Aufforderungssignals (Sa) von der ersten Vergleichseinrichtung (24a) keine Eingangsbestätigung der mit der Sollspracheingabe (SSPE) übereinstimmenden Spracheingabe (SPE1) vorliegt.

13. Verfahren zum Betreiben eines Fahrzeugsteuersystems (10), insbesondere eines Fahrzeugsteuersystems (10) nach einem der voranstehenden Ansprüche,
**dadurch gekennzeichnet, dass** vor einem Auslösen einer Aktion
- ein Aufforderungssignal (Sa) erzeugt wird, mit dem die fahrzeugführende Person (P) zur Abgabe einer Bestätigung, mit der das Auslösen der Aktion freigegeben wird, aufgefordert wird,
- innerhalb einer vorgegebenen Zeitspanne nach Ausgabe des Aufforderungssignals (Sa) ein akustisches Eingangssignal (Se) empfangen und ein Empfangssignal (E1) erzeugt wird,
- das Empfangssignal (E1) ausgewertet und eine darin enthaltene Spracheingabe (SPE1) erfasst wird,
- die Spracheingabe (SPE1) auf eine Übereinstimmung mit einer Sollspracheingabe (SSPE) verglichen wird und
- das Auslösen der Aktion davon abhängig gemacht wird, dass innerhalb der vorgegebenen Zeitspanne nach Ausgabe des Aufforderungssignals (Sa) eine mit der Sollspracheingabe (SSPE) übereinstimmende Spracheingabe (SPE1) eingegangen ist.

14. Computerprogrammprodukt (CPP) für ein Fahrzeugsteuersystem (10), insbesondere ein Fahrzeugsteuersystem (10) nach einem der voranstehenden Ansprüche 1 bis 12,
**dadurch gekennzeichnet, dass** das Computerprogrammprodukt (CPP) umfasst:
- eine Aufforderungsmodul (M21) zum Erzeugen eines Aufforderungssignals (Sa), mit dem vor einem automatischen Auslösen einer Aktion die fahrzeugführende Person (P) zur Abgabe einer Bestätigung aufgefordert wird,
- ein erstes Spracherkennungsmodul (M23a), das ein von einem Mikrofon (22a) bereitgestelltes Empfangssignal (E1) auswertet und eine darin enthaltene Spracheingabe (SPE1) erfasst,
- ein dem ersten Spracherkennungsmodul nachgeordnetes erstes Vergleichsmodul (M24a), das die Spracheingabe (SPE1) auf eine Übereinstimmung mit einer Sollspracheingabe (SSPE) vergleicht, und
- ein Auslösemodul (M25), das das Auslösen der Aktion zumindest auch davon abhängig macht, dass innerhalb einer vorgegebenen Zeitspanne nach Ausgabe des Aufforderungssignals (Sa) der Eingang einer mit der Sollspracheingabe (SSPE) übereinstimmende Spracheingabe (SPE1) von dem ersten Vergleichsmodul (24a) bestätigt worden ist.

15. Schienenfahrzeug,
**dadurch gekennzeichnet, dass** das Schienenfahrzeug mit einem Fahrzeugsteuersystem (10) nach einem der voranstehenden Ansprüche und/oder einem Computerprogrammprodukt nach Anspruch 14 ausgestattet ist und/oder zur Ausführung eines Verfahrens nach Anspruch 13 konfiguriert ist.
